# EUROPÄISCHE PATENTANMELDUNG

(11) **EP 2 444 381 A1**
(43) Veröffentlichungstag der Anmeldung: **25.04.2012**
(21) Anmeldenummer: 10188031.8
(22) Anmeldetag: 19.10.2010
(51) Int. Cl.: C03C 17/36, H05B 3/86

(54) **Transparente Scheibe**

(71) Anmelder: Saint-Gobain Glass France, 92400 Courbevoie (FR)
(72) Erfinder: Lisinski, Susanne, 50739 Köln (DE); Drese, Robert, 52062 Aachen (DE); Fischer, Klaus, 52477 Alsdorf (DE); Janzyk, Sebastian, 52134 Herzogenrath (DE)
(74) Vertreter: Lendvai, Tomas

(57) **Zusammenfassung**

Die vorliegende Erfindung betrifft eine transparente Scheibe mit elektrisch beheizbarer Beschichtung, mindestens umfassend:
- eine erste Scheibe (2.1) und eine zweite Scheibe (2.2), die mit mindestens einer Zwischenschicht (3) flächenmäßig verbunden sind,
- mindestens eine elektrisch beheizbare Beschichtung (4), die mindestens teilweise und mindestens auf einer der Innenseiten (II) oder (III) der Scheiben (2.1) oder (2.2) angebracht ist,
wobei
- die elektrisch beheizbare Beschichtung (4) mindestens vier übereinander angeordnete funktionelle Schichten (5) aufweist und jede funktionelle Schicht (5) mindestens umfasst
o eine Schicht optisch hochbrechenden Materials (6) mit einem Brechungsindex ≥ 2,1,
o oberhalb der Schicht optisch hochbrechenden Materials (6) eine erste Anpassungsschicht (8),
o oberhalb der ersten Anpassungsschicht (8) eine silberhaltige Schicht (9),
o oberhalb der silberhaltigen Schicht (9) eine zweite Anpassungsschicht (10), wobei

- die Schichtdicke jeweils einer der silberhaltigen Schichten (9) von 8 nm bis 20 nm und die Gesamtschichtdicke aller silberhaltigen Schichten (9) von 50 nm bis 80 nm beträgt,
- die elektrisch beheizbare Beschichtung (4) mindestens eine Glättungsschicht (7) aufweist, die unterhalb einer der ersten Anpassungsschichten (8) oder unterhalb einer der Schichten optisch hochbrechenden Materials (6) angeordnet ist und
- die transparente Scheibe (1) eine Gesamttransmission von > 70% aufweist.

## Beschreibung

Die Erfindung betrifft eine transparente Scheibe mit einer elektrisch beheizbaren Beschichtung, insbesondere eine elektrisch beheizbare Fahrzeugscheibe. Die Erfindung betrifft außerdem die Verwendung der erfindungsgemäßen transparenten Scheibe als Fahrzeugscheibe, insbesondere als Windschutzscheibe und Heckscheibe.

An die Verglasung von Kraftfahrzeugen werden hohe Anforderungen gestellt. Hinsichtlich der Größe des Sichtbereichs und der strukturellen Stabilität der Scheiben gelten folgende gesetzlichen Vorschriften:
- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, Nr. 29 "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Das Sichtfeld einer Fahrzeugscheibe muss frei von Eis und Beschlag gehalten werden. Bei Kraftfahrzeugen mit Verbrennungsmotor wird oftmals Motorwärme verwendet, um einen Luftstrom zu erwärmen. Der warme Luftstrom wird dann auf die Scheiben gelenkt.

Alternativ kann die Scheibe eine elektrische Heizfunktion aufweisen. DE 103 52 464 A1 offenbart eine Verbundglasscheibe mit zwei Glasscheiben. Zwischen den Glasscheiben sind parallel zueinander verlaufende Drähte eingelegt. Wird eine Spannung an die Drähte angelegt, fließt ein elektrischer Strom. Die Glasscheibe wird durch die Joulsche Wärmeentwicklung des stromdurchflossenen Widerstands beheizt. Der ohmsche Widerstand der Drähte wird so gewählt, dass eine Heizleistung P von etwa 600 W/m² erzielt wird. Aufgrund von Design- und Sicherheitsaspekten muss die Anzahl der Drähte in dem Glas sowie der Durchmesser der Drähte so klein wie möglich gehalten werden. Die Drähte dürfen bei Tageslicht und nachts bei Scheinwerferlicht visuell nicht oder kaum wahrnehmbar sein.

Besser geeignet sind transparente, elektrisch leitfähige Beschichtungen, wie sie aus WO 03/024155 A2 bekannt sind. Dort weist eine Glasscheibe eine elektrisch beheizbare Silberschicht auf. Beschichtungen auf der Basis von dünnen Silberschichten sind kostengünstig herstellbar und alterungsstabil. Die Schichten weisen in der Regel Flächenwiderstände im Bereich von 3 Ohm/Quadrat bis 5 Ohm/Quadrat auf.

Die Heizleistung P einer elektrisch beheizbaren Beschichtung mit einem Flächenwiderstand R_{Quadrat}, einer Betriebsspannung U und einem Abstand h zwischen zwei Sammelleitern lässt sich mit der Formel P = U²/(R_{Quadrat}*h²) berechnen. Der Abstand h zwischen zwei Sammelleitern beträgt bei typischen Windschutzscheiben von Personenkraftwagen etwa 0,8 m, was ungefähr der Scheibenhöhe entspricht. Um bei einem Flächenwiderstand von 4 Ohm/Quadrat eine gewünschte Heizleistung P von 600 W/m² zu erzielen, ist eine Betriebsspannung U von etwa 40 V notwendig. Da die Bordspannung von Kraftfahrzeugen üblicherweise 14 V beträgt, ist ein Netzteil oder ein Spannungswandler notwendig, um eine Betriebsspannung von 40 V zu erzeugen. Eine Spannungserhöhung von 14 V auf 40 V ist immer mit elektrischen Leitungsverlusten und zusätzlichen Kosten für zusätzliche Bauelemente verbunden.

US 2007/0082219 A1 und US 2007/0020465 A1 offenbaren transparente, elektrisch leitfähige Beschichtungen mit drei oder mehr Silberlagen und Flächenwiderständen zwischen 0,7 Ohm/Quadrat und 1,5 Ohm/Quadrat. Für eine Betriebsspannung U = 14 V, einen Flächenwiderstand R_{Quadrat} = 1 Ohm/Quadrat und einen Abstand h = 0,8 m ergibt sich eine Heizleistung P von etwa 300 W/m².

Die Aufgabe der vorliegenden Erfindung besteht darin, eine transparente Scheibe mit einer elektrisch beheizbaren Beschichtung bereitzustellen, die eine Heizleistung von 500 W/m² bis 700 W/m² bei einer Betriebsspannung von 12 V bis 15 V aufweist. Die elektrisch beheizbare Beschichtung soll dabei kostengünstig herstellbar und alterungsbeständig sein sowie eine hohe Transmission und Farbtreue aufweisen.

Die Aufgabe der vorliegenden Erfindung wird erfindungsgemäß durch eine transparente Scheibe mit einer elektrisch beheizbaren Beschichtung gemäß Anspruch 1 gelöst. Bevorzugte Ausführungen gehen aus den Unteransprüchen hervor. Ein Verfahren zur Herstellung einer transparenten Scheibe mit elektrisch beheizbarer Beschichtung und eine Verwendung der transparenten Scheibe gehen aus weiteren Ansprüchen hervor.

Die erfindungsgemäße transparente Scheibe enthält mindestens zwei Scheiben, die mit mindestens einer Zwischenschicht miteinander verbunden sind. Als Scheiben sind im Grunde alle transparenten, elektrisch isolierenden Substrate geeignet, die unter den Bedingungen der Herstellung und der Verwendung der erfindungsgemäßen transparenten Scheibe thermisch und chemisch stabil sowie dimensionsstabil sind.

Die Scheiben enthalten bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Beispiele geeigneter Gläser sind aus DE 697 31 268 T2, Seite 8, Absatz [0053], bekannt.

Die Dicke der Scheiben kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheiben kann breit variieren und richtet sich nach der erfindungsgemäßen Verwendung.

Die Scheiben können eine beliebige dreidimensionale Form aufweisen. Vorzugsweise hat die dreidimensionale Form keine Schattenzonen, so dass sie beispielsweise durch Kathodenzerstäubung beschichtet werden kann. Die Substrate sind bevorzugt planar oder leicht oder stark in einer Richtung oder in mehreren Richtungen des Raumes gebogen. Insbesondere werden planare Substrate verwendet. Die Scheiben können farblos oder gefärbt sein.

In einer bevorzugten Ausführungsform der erfindungsgemäßen transparenten Scheibe enthält mindestens eine der Scheiben Glas und mindestens eine der Scheiben enthält Kunststoff. Insbesondere bei einer erfindungsgemäßen Verwendung als Fahrzeugscheibe enthält die bezüglich des Fahrzeuginnenraums außenliegende Scheibe Glas und die innenliegende Scheibe Kunststoff.

Die Scheiben werden durch Zwischenschichten miteinander verbunden. Die Zwischenschichten enthalten vorzugsweise thermoplastische Kunststoffe wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Mindestens eine der Scheiben der erfindungsgemäßen transparenten Scheibe ist auf einer Innenseite mit einer elektrisch beheizbaren Beschichtung beschichtet. Innenseite bedeutet im Rahmen der vorliegenden Erfindung jede einer Zwischenschicht zugewandte Seite.

Im Falle eines Scheibenverbundes aus zwei Scheiben kann sich eine transparente, elektrisch leitfähige Schicht auf der Innenseite der einen oder der anderen Scheibe befinden. Alternativ kann sich auch jeweils eine elektrisch beheizbare Beschichtung auf jeder der beiden Innenseiten befinden. Im Falle eines Scheibenverbunds aus mehr als zwei Scheiben können sich auch mehrere elektrisch beheizbare Beschichtungen auf mehreren Innenseiten der Scheiben befinden. Alternativ kann eine elektrisch beheizbare Beschichtung zwischen zwei Zwischenschichten eingebettet sein. Die elektrisch beheizbare Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die elektrisch beheizbare Beschichtung umfasst mindestens vier übereinander angeordnete funktionelle Schichten. Jede funktionelle Schicht umfasst mindestens
- eine Schicht optisch hochbrechenden Materials mit einem Brechungsindex ≥ 2,1,
- eine erste Anpassungsschicht, die oberhalb der Schicht optisch hochbrechenden Materials angeordnet ist,
- eine silberhaltige Schicht mit jeweils einer Schichtdicke von 8 nm bis 20 nm, die oberhalb der ersten Anpassungsschicht angeordnet ist und
- eine zweite Anpassungsschicht, die oberhalb der silberhaltigen Schicht angeordnet ist.

Ist eine erste Schicht oberhalb einer zweiten Schicht angeordnet, so bedeutet dies im Rahmen der vorliegenden Erfindung, dass die erste Schicht weiter von dem Substrat, auf das die Schichten aufgebracht sind, entfernt angeordnet ist als die zweite Schicht. Ist eine erste Schicht unterhalb einer zweiten Schicht angeordnet ist, so bedeutet dies im Rahmen der vorliegenden Erfindung, dass die zweite Schicht weiter von dem Substrat, auf das die Schichten aufgebracht sind, entfernt angeordnet ist als die erste Schicht.

Die Gesamtschichtdicke aller silberhaltigen Schichten der gesamten elektrisch beheizbaren Beschichtung beträgt von 50 nm bis 80 nm.

Die elektrisch beheizbare Beschichtung umfasst außerdem mindestens eine Glättungsschicht in mindestens einer der funktionellen Schichten, wobei die Glättungsschicht mindestens unterhalb einer der ersten Anpassungsschichten oder unterhalb einer der Schichten optisch hochbrechenden Materials angeordnet ist. Die Glättungsschicht ist bevorzugt unmittelbar unterhalb der ersten Anpassungsschicht angeordnet.

Die transparente Scheibe weist außerdem eine Gesamttransmission von > 70% auf. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

In einer bevorzugten Ausgestaltung der erfindungsgemäßen elektrisch beheizbaren Beschichtung enthält jede funktionelle Schicht mit einer Schichtdicke der silberhaltigen Schicht < 16 nm eine Glättungsschicht, die unterhalb der jeweiligen ersten Anpassungsschicht angeordnet ist. Die Glättungsschicht hat die Aufgabe die Oberfläche für eine anschließend oberhalb angebrachte silberhaltige Schicht zu optimieren. Eine auf eine glattere Oberfläche abgeschiedene silberhaltige Schicht weist einen höheren Transmissionsgrad bei einem gleichzeitig niedrigeren Flächenwiderstand auf. Dieser Effekt ist umso günstiger, je dünner die silberhaltige Schicht ist.

In einer besonders bevorzugten Ausgestaltung der erfindungsgemäßen elektrisch beheizbaren Beschichtung kann jede funktionelle Schicht eine Glättungsschicht aufweisen, die unterhalb einer jeweiligen ersten Anpassungsschicht angeordnet ist.

In einer vorteilhaften Ausgestaltung der erfindungsgemäßen elektrisch beheizbaren Beschichtung enthält die elektrisch beheizbare Beschichtung vier bis sechs, bevorzugt vier funktionelle Schichten.

In einer bevorzugten Ausgestaltung der erfindungsgemäßen elektrisch beheizbaren Beschichtung beträgt die Schichtdicke einer einzelnen silberhaltigen Schicht von 13 nm bis 19 nm und die Gesamtschichtdicke aller silberhaltigen Schichten von 60 nm bis 70 nm.

Die elektrisch beheizbare Beschichtung enthält besonders bevorzugt vier funktionelle Schichten. In einer vorteilhaften Ausgestaltung einer elektrisch beheizbaren Beschichtung mit vier funktionellen Schichten enthalten je zwei funktionelle Schichten dünnere silberhaltige Schichten (A) und je zwei funktionelle Schichten dickere silberhaltige Schichten (B). Die elektrisch beheizbare Beschichtung enthält bevorzugt eine Schichtenfolge der Form A-B-B-A. Die Schichtdicke der dünneren silberhaltigen Schichten (A) beträgt beispielsweise 13 nm bis 15 nm, die Schichtdicke der dickeren silberhaltigen Schichten (B) beträgt beispielsweise von 17 nm bis 19 nm.

Die silberhaltigen Schichten enthalten mindestens 90 Gew. % Silber, bevorzugt 99,9 Gew. %. Die silberhaltigen Schichten werden mit gängigen Verfahren zur Schichtabscheidung von Metallen, beispielsweise durch Vakuumverfahren wie die magnetfeldunterstützte Kathodenzerstäubung aufgebracht.

In einer bevorzugten Ausgestaltung der erfindungsgemäßen transparenten Scheibe weist die elektrisch beheizbare Beschichtung einen Flächenwiderstand < 0,6 Ohm/Quadrat auf, bevorzugt von 0,4 Ohm/Quadrat bis 0,55 Ohm/Quadrat.

In einer bevorzugten Ausgestaltung der erfindungsgemäßen transparenten Scheibe enthält die Glättungsschicht ein Zinn-Zink-Mischoxid, bevorzugt ein Antimon-dotiertes Zinn-Zink-Mischoxid (SnZnO:Sb). Ein Verfahren zur Herstellung von Zinn-Zink-Mischoxid-Schichten durch reaktive Kathodenzerstäubung ist beispielsweise aus DE 198 48 751 C1 bekannt. Das Zinn-Zink-Mischoxid wird bevorzugt mit einem Target abgeschieden, welches von 25 Gew. % bis 80 Gew. % Zinn, von 20 Gew. % bis 75 Gew. % Zink und von 0 Gew. % bis 10 Gew. % Antimon sowie herstellungsbedingte Beimengungen enthält. Das Target enthält besonders bevorzugt von 45 Gew. % bis 75 Gew. % Zinn, von 25 Gew. % bis 55 Gew. % Zink und von 0 Gew. % bis 10 Gew. % Antimon sowie herstellungsbedingte Beimengungen anderer Metalle. Das Target enthält insbesondere von 45 Gew. % bis 75 Gew. % Zinn, von 24 Gew. % bis 54 Gew. % Zink und von 1 Gew. % bis 5 Gew. % Antimon sowie herstellungsbedingte Beimengungen. Die Abscheidung des Zinn-Zink-Mischoxids erfolgt unter Zugabe von Sauerstoff als Reaktionsgas während der Kathodenzerstäubung.

Die Schichtdicke einer Glättungsschicht beträgt bevorzugt von 3 nm bis 20 nm besonders bevorzugt von 4 nm bis 10 nm.

In einer weiteren bevorzugten Ausgestaltung der erfindungsgemäßen transparenten Scheibe enthält die erste Anpassungsschicht und/oder die zweite Anpassungsschicht Zinkoxid ZnO_{1-δ} mit 0 ≤ δ ≤ 0,01, bevorzugt Aluminium-dotiertes Zinkoxid (ZnO:Al). Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Zinkoxid-Schicht wird bevorzugt durch magnetfeldunterstützte Kathodenzerstäubung abgeschieden. Das Target enthält bevorzugt von 85 Gew. % bis 100 Gew. % Zinkoxid (ZnO) und von 0 Gew. % bis 15 Gew. % Aluminium sowie herstellungsbedingte Beimengungen. Das Target enthält besonders bevorzugt von 90 Gew. % bis 95 Gew. % Zinkoxid (ZnO) und von 5 Gew. % bis 10 Gew. % Aluminium sowie herstellungsbedingte Beimengungen. Die Schichtdicke der ersten und/oder der zweiten Anpassungsschicht beträgt bevorzugt von 3 nm bis 20 nm besonders bevorzugt von 4 nm bis 10 nm.

In einer weiteren bevorzugten Ausgestaltung der erfindungsgemäßen transparenten Scheibe enthält die erste Anpassungsschicht und/oder die zweite Anpassungsschicht ein Gettermaterial, bevorzugt Niob, Titan, Nickel, Chrom, Palladium oder Legierungen davon mit einem Anteil von 0,1 Gew. % bis 2 Gew. %. Das Gettermaterial absorbiert diffundierenden Sauerstoff während einer nachfolgenden Temperaturbehandlung.

In einer weiteren bevorzugten Ausgestaltung der erfindungsgemäßen transparenten Scheibe enthält die Schicht optisch hochbrechenden Materials ein Metalloxid wie SnO₂, Bi₂O₃, TiO₂, ZnO oder Siliziumnitrid oder ein Metallnitrid wie AIN oder ein Silizium-Metall-Mischnitrid wie SiZrN, SiAIN, SiHfN oder SiTiN. Da die silberhaltigen Schichten sehr korrosionsempfindlich sind, können sauerstofffreie Materialien bevorzugt sein. Die Schichtdicke einer Schicht optisch hochbrechenden Materials beträgt bevorzugt von 10 nm bis 100 nm besonders bevorzugt von 20 nm bis 75 nm.

In einer weiteren bevorzugten Ausgestaltung der erfindungsgemäßen transparenten Scheibe weist die Schicht optisch hochbrechenden Materials einen Brechungsindex n von 2,1 bis 2,5 auf, besonders bevorzugt von 2,2 bis 2,3.

In einer besonders bevorzugten Ausgestaltung der erfindungsgemäßen transparenten Scheibe enthält die Schicht optisch hochbrechenden Materials ein Silizium-Zirkonium-Mischnitrid. Das Silizium-Zirkonium-Mischnitrid wird bevorzugt mit einem Target abgeschieden, welches von 40 Gew. % bis 70 Gew. % Silizium, von 30 Gew. % bis 60 Gew. % Zirkonium und von 0 Gew. % bis 10 Gew. % Aluminium sowie herstellungsbedingte Beimengungen enthält. Das Target enthält besonders bevorzugt von 45 Gew. % bis 60 Gew. % Silizium, von 40 Gew. % bis 55 Gew. % Zirkonium und von 3 Gew. % bis 8 Gew. % Aluminium sowie herstellungsbedingte Beimengungen. Die Abscheidung des Silizium-Zirkonium-Mischnitrids erfolgt unter Zugabe von Stickstoff als Reaktionsgas während der Kathodenzerstäubung.

In einer bevorzugten Ausgestaltung der erfindungsgemäßen transparenten Scheibe enthält die elektrisch beheizbare Beschichtung eine Abdeckschicht, die oberhalb der Stapelfolge funktioneller Schichten angeordnet ist. Die Abdeckschicht schützt die darunter angeordneten Schichten vor Korrosion und passt die optischen Eigenschaften der funktionellen Schichten an die der Zwischenschicht an. Die Abdeckschicht enthält bevorzugt Siliziumnitrid oder Silizium-Zirkonium-Mischnitrid. Die Schichtdicke der Abdeckschicht beträgt bevorzugt von 10 nm bis 100 nm besonders bevorzugt von 20 nm bis 50 nm.

In einer bevorzugten Ausgestaltung der erfindungsgemäßen transparenten Scheibe ist eine Blockerschicht zwischen erster Anpassungsschicht und silberhaltiger Schicht und/oder zwischen zweiter Anpassungsschicht und silberhaltiger Schicht angeordnet. Die Blockerschicht enthält bevorzugt Niob, Titan, Nickel, Chrom oder Legierungen davon, besonders bevorzugt Nickel-Chrom-Legierungen. Die Schichtdicke der Blockerschicht beträgt bevorzugt von 0,1 nm bis 2 nm, besonders bevorzugt von 0,4 nm bis 1 nm. Die Blockerschicht zwischen erster Anpassungsschicht und silberhaltiger Schicht dient insbesondere zur Stabilisierung der silberhaltigen Schicht während der Wärmebehandlung und verbessert die optische Qualität der elektrisch beheizbaren Beschichtung. Die Blockerschicht zwischen zweiter Anpassungsschicht und silberhaltiger Schicht verhindert den Kontakt der empfindlichen silberhaltigen Schicht mit der oxidierenden reaktiven Atmosphäre während der Abscheidung der folgenden Schicht aus Zinkoxid durch reaktive Kathodenzerstäubung.

Die Anpassungsschicht, die Glättungsschicht, die Schicht optisch hochbrechenden Materials, die Blockerschicht, die Abdeckschicht und die silberhaltige Schicht werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die Schichtdicken der Anpassungsschicht, der Glättungsschicht, der Schicht optisch hochbrechenden Materials und der silberhaltigen Schicht mit den gewünschten Eigenschaften hinsichtlich Transmission, Flächenwiderstand und Farbwerten ergeben sich für den Fachmann in einfacher Weise durch Simulationen im Bereich der oben angegebenen Schichtdicken.

In einer vorteilhaften Ausgestaltung der erfindungsgemäßen transparenten Scheibe erstreckt sich die elektrisch beheizbare Beschichtung auf mindestens 50%, bevorzugt auf mindestens 70% und besonders bevorzugt auf mindestens 90% der Fläche der Seite der Scheibe, auf die sie aufgebracht ist.

Die elektrisch beheizbare Beschichtung erstreckt sich bevorzugt über die gesamte Fläche der Seite der Scheibe, auf die sie aufgebracht ist, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich kann die elektrisch beheizbare Beschichtung in einem weiteren Bereich entschichtet sein, der beispielsweise als Datenübertragungsfenster oder Kommunikationsfenster dient. Die transparente Scheibe ist in dem weiteren entschichteten Bereich für elektromagnetische und insbesondere infrarote Strahlung durchlässig.

In einer bevorzugten Ausgestaltung der erfindungsgemäßen transparenten Scheibe ist die elektrisch beheizbare Beschichtung über Sammelleiter mit einer Spannungsquelle verbunden und eine an die elektrisch beheizbare Beschichtung angelegte Spannung weist einen Wert von 12 V bis 15 V auf.

Die transparente, elektrisch leitfähige Beschichtung ist mit Sammelleitern, sogenannten bus bars, zur Übertragung elektrischer Leistung verbunden. Beispiele geeigneter Sammelleiter sind aus DE 103 33 618 B3 und EP 0 025 755 B1 bekannt.

Die erfindungsgemäßen Sammelleiter werden vorteilhaft durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt bevorzugt von 5 µm bis 20 µm.

In einer alternativen Ausgestaltung der erfindungsgemäßen Sammelleiter werden dünne und schmale Metallfolienstreifen oder Metalldrähte verwendet, die bevorzugt Kupfer und/oder Aluminium enthalten, insbesondere werden Kupferfolienstreifen mit einer Dicke von etwa 50 µm verwendet. Die Breite der Kupferfolienstreifen beträgt bevorzugt 1 mm bis 10 mm. Die Metallfolienstreifen oder Metalldrähte werden beim Zusammenlegen der Verbundschichten auf die Beschichtung aufgelegt. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann alternativ durch Auflöten oder Kleben mit einem elektrisch leitfähigen Kleber hergestellt werden.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Klebeschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer bevorzugten Ausgestaltung der erfindungsgemäßen transparenten Scheibe weist die elektrisch beheizbare Beschichtung eine Heizleistung von 500 W/m² bis 700 W/m² auf.

Die Erfindung umfasst weiter ein Verfahren zur Herstellung einer transparenten Scheibe, wobei mindestens:
a) die Innenseite einer ersten Scheibe und/oder die Innenseite einer zweiten Scheibe mit einer elektrisch beheizbaren Beschichtung beschichtet wird,
b) die elektrisch beheizbare Beschichtung mit mindestens zwei Sammelleitern verbunden wird,
c) die erste Scheibe und die zweite Scheibe auf eine Temperatur von 500°C bis 700°C erhitzt werden und
d) die erste Scheibe und die zweite Scheibe mit einer Zwischenschicht flächendeckend verbunden werden.

Der dritte Verfahrensschritt (c) kann bevorzugt im Rahmen eines Biegeprozesses der Scheiben erfolgen. Die elektrisch beheizbare Beschichtung muss insbesondere geeignet sein den Biegeprozess und/oder den Verbundprozess ohne Beschädigungen zu überstehen.

Die Eigenschaften der oben beschriebenen elektrisch beheizbaren Beschichtung verbessern sich regelmäßig durch die Erhitzung im dritten Verfahrensschritt (c). Der Flächenwiderstand der elektrisch beheizbaren Beschichtung nach der Erhitzung ist in der Regel um etwa 20 % niedriger als vor der Erhitzung.

Die Erfindung umfasst weiter die Verwendung der erfindungsgemäßen transparenten Scheibe in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und/oder Dachscheibe.

Im Folgenden wird die Erfindung anhand einer Zeichnung und eines Beispiels und Vergleichsbeispiels näher erläutert. Die Zeichnung ist eine schematische Darstellung und nicht maßstabsgetreu. Die Zeichnung schränkt die Erfindung in keiner Weise ein.

Es zeigen:
Figur 1 eine Draufsicht auf eine erfindungsgemäße transparente Scheibe,
Figur 2 eine Querschnittszeichnung entlang der Schnittlinie A-A' in Figur 1 und
Figur 3 eine Querschnittszeichnung entlang der Schnittlinie B-B' in Figur 2 durch eine elektrisch beheizbare Beschichtung einer erfindungsgemäßen transparenten Scheibe.

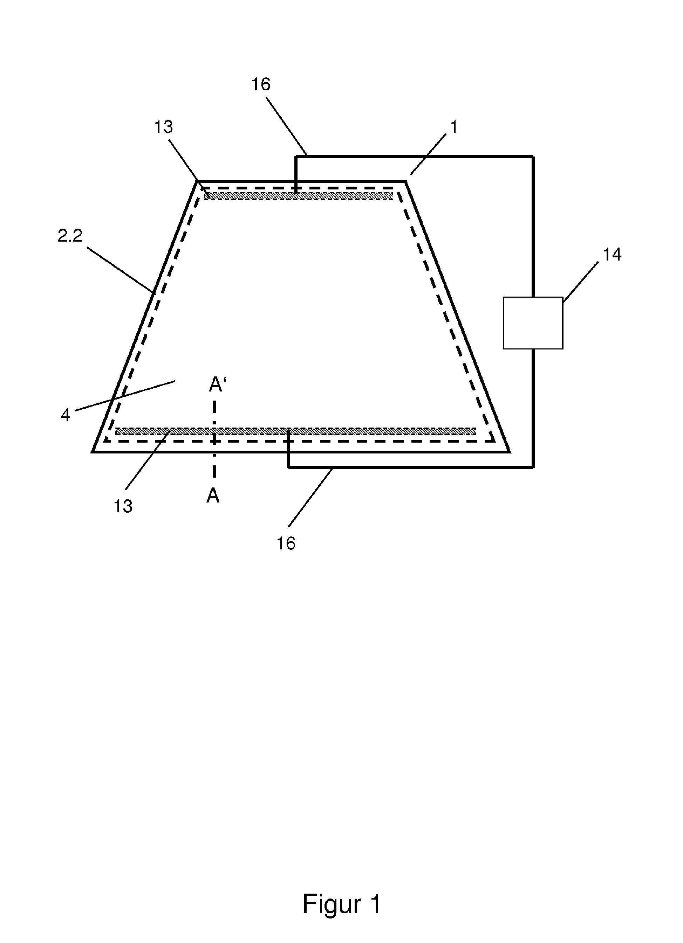

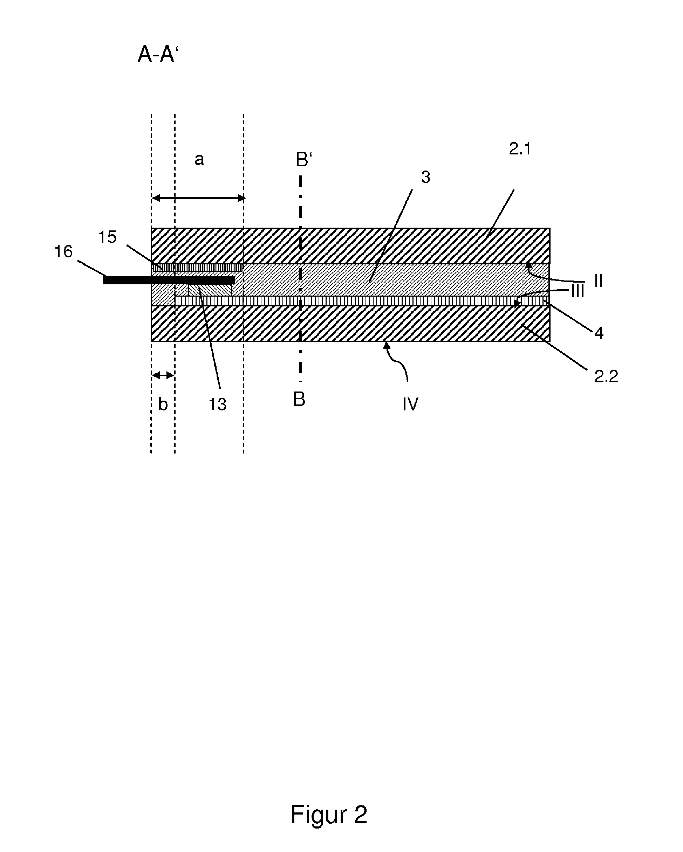

In den folgenden Figuren ist eine Ausführung der erfindungsgemäßen transparenten Scheibe am Beispiel einer Windschutzscheibe eines Personenkraftwagens dargestellt. Figur 1 zeigt eine erfindungsgemäß ausgebildete transparente Scheibe (1) in einer Draufsicht auf die Außenseite (IV) der zweiten Scheibe (2.2) und Figur 2 eine Querschnittszeichnung entlang der Linie A-A' aus Figur 1. Die zweite Scheibe (2.2) ist die dem Innenraum des Personenkraftwagens zugewandte Scheibe. Die Außenseite (IV) der zweiten Scheibe (2.2) ist die der Zwischenschicht und der ersten Scheibe (2.1) abgewandte Seite der zweiten Scheibe (2.2).

Die einzelnen Scheiben (2.1) und (2.2) der transparenten Scheibe (1) sind bevorzugt aus Floatglas und weisen vorzugsweise Dicken von jeweils 2,1 mm auf. Die einzelnen Scheiben sind mit einer Zwischenschicht (3) miteinander verbunden. Die Zwischenschicht (3) besteht vorzugsweise aus einer thermoplastischen Polyvinylbutyral (PVB)-Folie mit einer Dicke von 0,76 mm. Im dargestellten Beispiel ist die elektrisch beheizbare Beschichtung (4) auf die der Zwischenschicht (3) zugewandten Seite (III) der zweiten Scheibe (2.2) aufgebracht. Die elektrisch beheizbare Beschichtung (4) kann gleichwohl auf die der Zwischenschicht (3) zugewandten Seite (II) der ersten Scheibe (2.1) oder auf beiden Scheibeninnenseiten (II) und (III) aufgebracht werden.

Die elektrisch beheizbare Beschichtung (4) erstreckt sich über die gesamte Fläche der Seite (III) der zweiten Scheibe (2.2), abzüglich eines umlaufenden rahmenförmigen entschichteten Bereichs mit einer Breite b von 8 mm. Dieser dient der elektrischen Isolierung zwischen der spannungsführenden elektrisch beheizbaren Beschichtung (4) und der Fahrzeugkarosserie. Der entschichtete Bereich ist durch Verkleben mit der Zwischenschicht (3) hermetisch versiegelt, um die elektrisch beheizbare Beschichtung (4) vor eindringender Feuchtigkeit zu schützen.

Zwei Sammelleiter (13) befinden sich am äußeren oberen beziehungsweise unteren Rand der zweiten Scheibe (2.2). Die Sammelleiter (13) wurden mittels einer leitfähigen Silberpaste auf die elektrisch beheizbare Beschichtung (4) aufgedruckt und eingebrannt. Die Schichtdicke der eingebrannten Silber-Paste beträgt beispielsweise 15 µm. Die Sammelleiter (13) sind elektrisch leitend mit den darunterliegenden Bereichen der elektrisch beheizbaren Beschichtung (4) verbunden.

Die Zuleitungen (16) bestehen aus verzinnten Kupferfolien mit einer Breite von 10 mm und einer Dicke von 0,3 mm. Jede Zuleitung (16) ist jeweils mit einem der Sammelleiter (13) verlötet. Die elektrisch beheizbare Beschichtung (4) ist über die Sammelleiter (13) und die Zuleitungen (16) mit einer Spannungsquelle (15) verbunden. Die Spannungsquelle (14) ist beispielsweise die 14 V Bordspannung eines Kraftfahrzeugs.

Auf der ersten Scheibe (2.1) ist am Rand der Innenseite (II) eine opake Farbschicht mit einer Breite a von 20 mm als Abdeckdruck (15) rahmenförmig aufgebracht. Der Abdeckdruck (15) verdeckt die Sicht auf den Klebestrang, mit dem die transparente Scheibe in die Fahrzeugkarosserie eingeklebt wird. Der Abdeckdruck (15) dient gleichzeitig als Schutz des Klebers vor UV-Strahlung und damit als Schutz vor vorzeitiger Alterung des Klebers. Des Weiteren werden die Sammelleiter (13) und die Zuleitungen (16) durch den Abdeckdruck (15) verdeckt.

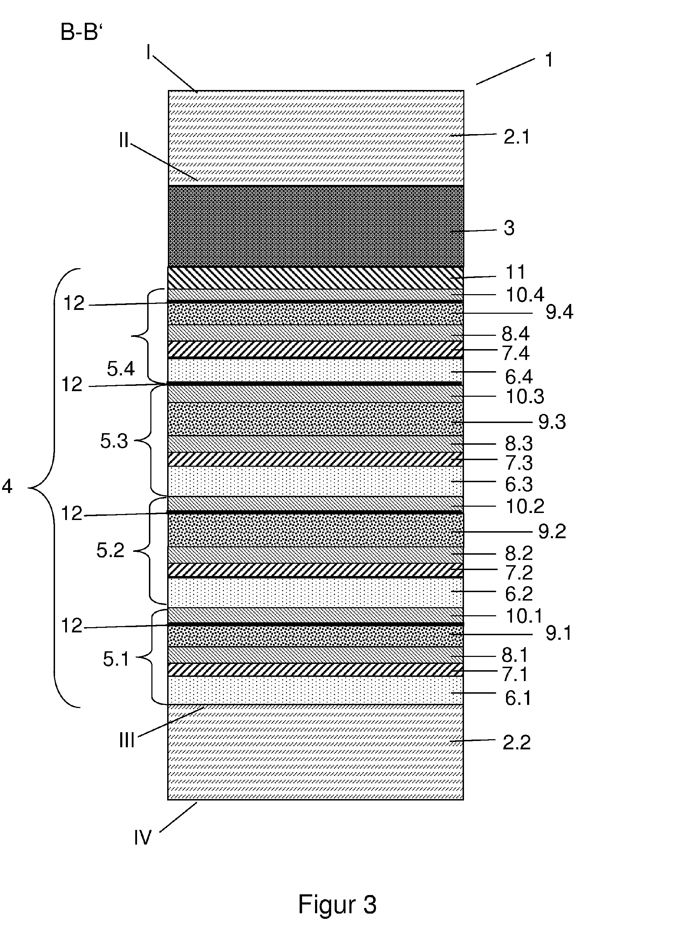

In Figur 3 ist eine Querschnittszeichnung entlang der Linie B-B' aus Figur 2 durch eine erfindungsgemäße transparente Scheibe (1) dargestellt. Die elektrisch beheizbare Beschichtung (4) umfasst vier funktionelle Schichten (5) (5.1, 5.2, 5.3 und 5.4), die flächendeckend übereinander angeordnet sind. Jede funktionelle Schicht (5) umfasst
- eine Schicht optisch hochbrechenden Materials (6) (6.1, 6.2, 6.3 und 6.4), die Aluminium-dotiertes Silizium-Zirkon-Mischnitrid (SiZrN:Al) enthält,
- eine Glättungsschicht (7) (7.1, 7.2, 7.3 und 7.4), die Antimon-dotiertes Zinn-Zink-Mischoxid (SnZnO:Sb) enthält,
- eine erste Anpassungsschicht (8) (8.1, 8.2, 8.3 und 8.4), die Aluminium-dotiertes Zinkoxid (ZnO:Al) enthält,
- eine silberhaltige Schicht (9) (9.1, 9.2, 9.3, 9.4) und
- eine zweite Anpassungsschicht (10) (10.1, 10.2, 10.3 und 10.4), die Aluminium-dotiertes Zinkoxid (ZnO:Al) enthält.

Die Schicht optisch hochbrechenden Materials (6), die Glättungsschicht (7), die Anpassungsschicht (8 und 10) und die silberhaltige Schicht (9) wurden durch Kathodenstrahlzerstäubung abgeschieden. Das Target zur Abscheidung der Anpassungsschicht (8 und 10) enthielt 92 Gew. % Zinkoxid (ZnO) und 8 Gew. % Aluminium. Das Target zur Abscheidung der Glättungsschicht (7) enthielt 68 Gew. % Zinn, 30 Gew. % Zink und 2 Gew. % Antimon. Das Target zur Abscheidung der Schicht optisch hochbrechenden Materials (6) enthielt 52,9 Gew. % Silizium, 43,8 Gew. % Zirkonium und 3,3 Gew. % Aluminium. Die Abscheidung der Glättungsschicht (7) erfolgte unter Zugabe von Sauerstoff als Reaktionsgas während der Kathodenzerstäubung. Die Abscheidung der Schicht optisch hochbrechenden Materials (6) erfolgte unter Zugabe von Stickstoff als Reaktionsgas während der Kathodenzerstäubung.

Zwischen jeder silberhaltigen Schicht (9) und der darüber angeordneten zweiten Anpassungsschicht (10) ist eine Blockerschicht (12) angeordnet. Die Blockerschicht (12) besteht beispielsweise aus einer 0,5 nm dicken Titanschicht, die mittels magnetfeldunterstützter Kathodenzerstäubung abgeschieden wurde. Die Abdeckschicht (11) umfasst in diesem Beispiel eine 35 nm dicke Aluminium-dotierte Silizium-Zirkonium-Mischnitrid-Schicht (SiZrN:Al). In einem weiteren Beispiel umfasst die Abdeckschicht (11) eine 38 nm dicke Siliziumnitrid (Si₃N₄)-Schicht.

Die genaue Schichtfolge mit Schichtdicken ist in Tabelle 1 dargestellt.

**Tabelle 1**

| | Bezugszeichen | Bezugszeichen | Schichtdicke |
|---|---|---|---|
| Glas | 2.1 | | 2,1 mm |
| PVB | 3 | | 0,76 mm |
| Abdeckschicht | 11 | | siehe Tabelle 2 |
| ZnO:Al | 10.4 | 5.4 | 7 nm |
| Ag | 9.4 | | 14 nm |
| ZnO:Al | 8.4 | | 7 nm |
| SnZnO:Sb | 7.4 | | 6 nm |
| SiZrN:Al | 6.4 | | 59,4 nm |
| ZnO:Al | 10.3 | 5.3 | 7 nm |
| Ag | 9.3 | | 18 nm |
| ZnO:Al | 8.3 | | 7 nm |
| SnZnO:Sb | 7.3 | | 6 nm |
| SiZrN:Al | 6.3 | | 52,6 nm |
| ZnO:Al | 10.2 | 5.2 | 7 nm |
| Ag | 9.2 | | 18 nm |
| ZnO:Al | 8.2 | | 7 nm |
| SnZnO:Sb | 7.2 | | 6 nm |
| SiZrN:Al | 6.2 | | 53,4 nm |
| ZnO:Al | 10.1 | 5.1 | 7 nm |
| Ag | 9.1 | | 14 nm |
| ZnO:Al | 8.1 | | 7 nm |
| SnZnO:Sb | 7.1 | | 6 nm |
| SiZrN:Al | 6.1 | | 20 nm |
| Glas | 2.2 | | 2,1 mm |

### Beispiel

In Tabelle 2 sind die Ergebnisse der optischen Messungen und der Widerstandmessungen an zwei erfindungsgemäßen elektrisch beheizbaren Beschichtungen mit der Stapelfolge aus Tabelle 1 für zwei verschiedene Abdeckschichten (11) dargestellt.

**Tabelle 2**

| Abdeckschicht (11) | SiZrN:Al (35 nm) | Si₃N₄ (38 nm) |
|---|---|---|
| vor Temperaturbehandlung | | |
| R_{Quadrat} [Ohm/Quadrat] | 0.602 | 0.607 |
| RL [%] | 9.0 | 6.8 |
| a* (D65/10°) | +23.8 | +28.8 |
| b* (D65/10°) | -37.0 | -34.6 |
| TL [%] | 67.7 | 68.4 |

| nach Temperaturbehandlung und Lamination | | |
|---|---|---|
| R_{Quadrat} [Ohm/Quadrat] | 0.485 | 0.499 |
| RL [%] | 12.3 | 11.6 |
| a* (D65/10°) | +3.2 | +3.2 |
| b* (D65/10°) | -32.1 | -31.4 |
| TL [%] | 71.2 | 72.0 |

Die elektrisch beheizbare Beschichtung mit einer Abdeckschicht (11) aus SiZrN:Al wies überraschenderweise schon vor einer Temperaturbehandlung einen sehr niedrigen Flächenwiderstand R_{Quadrat} von 0,602 Ohm/Quadrat und einen Transmissionsgrad TL von 67,7 % auf.

Anschließend wurden die erste Scheibe (2.1) und die zweite Scheibe (2.2) mit der elektrisch beheizbaren Beschichtung (4) bei einer Temperatur von etwa 650° C gebogen. Der Biegeprozess dauerte etwa 10 min. Anschließend wurden beide Scheiben (2.1) und (2.2) über die Zwischenschicht (3) bei einer Temperatur von etwa 140°C und einem Druck von beispielsweise 12 bar miteinander verbunden.

Nach der Temperaturbehandlung erniedrigte sich der Flächenwiderstand R_{Quadrat} um 19,4 % auf 0,485 Ohm/Quadrat und die Gesamttransmission TL der transparenten Scheibe erhöhte sich um etwa 5 % auf 71.2 %.

Der Reflektionsgrad RL der elektrisch beheizbaren Beschichtung betrug nach der Temperaturbehandlung 12,3 %. Die Farbwerte im L*a*b*-Farbraum lagen bei günstigen Werten von a* = 3,2 und b* = -32,1.

Die transparente Scheibe (1) des Beispiels erfüllt die gesetzlichen Anforderungen hinsichtlich der Gesamttransmission. Durch den geringen Flächenwiderstand R_{Quadrat} von 0,485 Ohm/Quadrat beträgt die Heizleistung P etwa 630 W/m², bei einer Betriebsspannung U von 14 V und einem Abstand h der Sammelleiter von 0,8 m.

### Vergleichsbeispiel

In Tabelle 3 ist ein Vergleichsbeispiel einer elektrisch beheizbaren Beschichtung nach dem Stand der Technik dargestellt. Es handelt sich dabei um das Beispiel 32 aus US 2007/0082219 A1. Die elektrisch beheizbare Beschichtung (4) wurde auf ein Substrat aus Klarglas mit einer Dicke von 2 mm aufgebracht. Die Schicht optisch hochbrechenden Materials (6) enthielt Si₃N₄. Eine Glättungsschicht (7) war nicht vorhanden.

**Tabelle 3**

| Vergleichsbeispiel nach dem Stand der Technik | |
|---|---|
| | Schichtdicke |
| Si₃N₄ | 30 nm |
| ZnO | 15 nm |
| Ag | 14 nm |
| ZnO | 10 nm |
| Si₃N₄ | 65 nm |
| ZnO | 15 nm |
| Ag | 14 nm |
| ZnO | 10 nm |
| Si₃N₄ | 60 nm |
| ZnO | 15 nm |
| Ag | 14 nm |
| ZnO | 10 nm |
| Si₃N₄ | 65 nm |
| ZnO | 15 nm |
| Ag | 14 nm |
| ZnO | 10 nm |
| Si₃N₄ | 30 nm |
| Glas | 2 mm |

Wie in Tabelle 4 dargestellt, konnte mit der Schichtfolge nach dem Stand der Technik aus Tabelle 3 eine Gesamttransmission von 70% erzielt werden. Der Flächenwiderstand R_{Quadrat} betrug jedoch 0,7 Ohm/Quadrat, was bei einer Betriebsspannung U von 14 V und einem Abstand h der Sammelleiter von 0,8 m einer Heizleistung P von etwa 440 W/m² entspricht.

**Tabelle 4**

| Vergleichsbeispiel nach Stand der Technik (nach Temperaturbehandlung) | |
|---|---|
| R_{Quadrat} [Ohm/Quadrat] | 0,7 |
| RL [%] | 10 |
| TL [%] | 70 |

Wie in Tabelle 5 dargestellt ist, bietet die erfindungsgemäße transparente Scheibe deutliche Vorteile gegenüber dem Stand der Technik. So ist die Heizleistung einer erfindungsgemäßen transparenten Scheibe um 43 % höher als bei dem Vergleichsbeispiel nach dem Stand der Technik.

**Tabelle 5**

| | Beispiel: Erfindungsgemäße transparente Scheibe | Vergleichsbeispiel: Transparente Scheibe nach dem Stand der Technik |
|---|---|---|
| R_{Quadrat} [Ohm/Quadrat] | 0,485 | 0,7 |
| TL [%] | 71,2 | 70 |
| P [W/m²], bei U=14V und h=0,8m | 630 | 440 |

Die erfindungsgemäße Lösung ergibt ein vorteilhaftes, aber auch sehr überraschendes Ergebnis. Bisher waren die Flächenwiderstände elektrisch beheizbarer Beschichtungen, die die gesetzlichen Vorgaben bezüglich Transmission und neutraler Färbung insbesondere bei Reflexion aufwiesen, so groß, dass bei einer Betriebsspannung von 14 V nur eine Heizleistung bis zu etwa 400 W/m² erreicht wurde. Mit der erfindungsgemäßen transparenten Scheibe können Flächenwiderstände um 0,5 Ohm/Quadrat und damit Heizleistungen bei Windschutzscheiben mit typischen Dimensionen von über 600 W/m² bei einer Betriebsspannung von 14 V erzielt werden. Die erfindungsgemäße transparente Scheibe weist dabei eine Gesamttransmission von > 70% auf und hat eine neutrale Färbung.

Diese Vorteile waren für den Fachmann überraschend und unerwartet.

Es zeigen:
- (1): transparente Scheibe
- (2.1): erste Scheibe
- (2.2): zweite Scheibe
- (3): Zwischenschicht
- (4): elektrisch beheizbare Beschichtung
- (5), (5.1), (5.2), (5.3), (5.4): funktionelle Schicht
- (6), (6.1), (6.2), (6.3), (6.4): Schicht optisch hochbrechenden Materials
- (7), (7.1), (7.2), (7.3), (7.4): Glättungsschicht
- (8), (8.1),(8.2), (8.3), (8.4): erste Anpassungsschicht
- (9), (9.1), (9.2), (9.3), (9.4): silberhaltige Schicht
- (10), (10.1), (10.2), (10.3), (10.4): zweite Anpassungsschicht
- (11): Abdeckschicht
- (12): Blockerschicht
- (13): Sammelleiter
- (14): Spannungsquelle
- (15): Abdeckdruck
- (16): Zuleitung
- a: Breite des durch (15) abgedeckten Bereichs
- b: Breite der Randentschichtung
- II: Innenseite der ersten Scheibe (2.1)
- III: Innenseite der zweiten Scheibe (2.2)
- IV: Außenseite der zweiten Scheibe (2.2)
- A-A': Schnittlinie
- B-B': Schnittlinie

## Patentansprüche

1. Transparente Scheibe mit elektrisch beheizbarer Beschichtung, mindestens umfassend:
- eine erste Scheibe (2.1) und eine zweite Scheibe (2.2), die mit mindestens einer Zwischenschicht (3) flächenmäßig verbunden sind,
- mindestens eine elektrisch beheizbare Beschichtung (4), die mindestens teilweise und mindestens auf einer der Innenseiten (II) oder (III) der Scheiben (2.1) oder (2.2) angebracht ist,
wobei
- die elektrisch beheizbare Beschichtung (4) mindestens vier übereinander angeordnete funktionelle Schichten (5) aufweist und jede funktionelle Schicht (5) mindestens umfasst
o eine Schicht optisch hochbrechenden Materials (6) mit einem Brechungsindex ≥ 2,1,
o oberhalb der Schicht optisch hochbrechenden Materials (6) eine erste Anpassungsschicht (8),
o oberhalb der ersten Anpassungsschicht (8) eine silberhaltige Schicht (9),
o oberhalb der silberhaltigen Schicht (9) eine zweite Anpassungsschicht (10), wobei
- die Schichtdicke jeweils einer der silberhaltigen Schichten (9) von 8 nm bis 20 nm und die Gesamtschichtdicke aller silberhaltigen Schichten (9) von 50 nm bis 80 nm beträgt,
- die elektrisch beheizbare Beschichtung (4) mindestens eine Glättungsschicht (7) aufweist, die unterhalb einer der ersten Anpassungsschichten (8) oder unterhalb einer der Schichten optisch hochbrechenden Materials (6) angeordnet ist und
- die transparente Scheibe (1) eine Gesamttransmission von > 70% aufweist.

2. Transparente Scheibe nach Anspruch 1, wobei jede funktionelle Schicht (5) mit einer Schichtdicke der silberhaltigen Schicht (9) < 16 nm eine Glättungsschicht (7) aufweist, die unterhalb der jeweiligen ersten Anpassungsschicht (8) angeordnet ist.

3. Transparente Scheibe nach Anspruch 1 oder 2, wobei jede funktionelle Schicht (5) eine Glättungsschicht (7) aufweist, die unterhalb der jeweiligen ersten Anpassungsschicht (8) angeordnet ist.

4. Transparente Scheibe nach einem der Ansprüche 1 bis 3, wobei die elektrisch beheizbare Beschichtung (4) vier bis sechs, bevorzugt vier funktionelle Schichten (5) enthält.

5. Transparente Scheibe nach einem der Ansprüche 1 bis 4, wobei die Schichtdicke der silberhaltigen Schichten (9) von 13 nm bis 19 nm und die Gesamtschichtdicke aller silberhaltigen Schichten (9) von 60 bis 70 nm beträgt.

6. Transparente Scheibe nach einem der Ansprüche 1 bis 5, wobei die elektrisch beheizbare Beschichtung (4) einen Flächenwiderstand von 0,4 Ohm/Quadrat bis 0,6 Ohm/Quadrat aufweist.

7. Transparente Scheibe nach einem der Ansprüche 1 bis 6, wobei die Glättungsschicht (7) ein Zinn-Zink-Mischoxid, wie Antimon-dotiertes Zinn-Zink-Mischoxid enthält.

8. Transparente Scheibe nach einem der Ansprüche 1 bis 7, wobei die erste Anpassungsschicht (8) und/oder die zweite Anpassungsschicht (10) Zinkoxid ZnO_{1-δ} mit 0 ≤ δ ≤ 0,01, wie Aluminium-dotiertes Zinkoxid enthält.

9. Transparente Scheibe nach einem der Ansprüche 1 bis 8, wobei die erste Anpassungsschicht (8) und/oder die zweite Anpassungsschicht (10) ein Gettermaterial, wie Niob, Titan, Nickel, Chrom, Palladium oder Legierungen davon enthält.

10. Transparente Scheibe nach Anspruch 1 bis 9, wobei die Schicht optisch hochbrechendes Material (6) ein Metalloxid wie SnO₂ Bi₂O₃, TiO₂ ZnO oder Siliziumnitrid oder ein Metallnitrid wie AIN oder ein Silizium-Metall-Mischnitrid wie SiZrN, SiAIN, SiHfN, SiTiN und Gemische davon enthält.

11. Transparente Scheibe nach Anspruch 1 bis 10, wobei die Schicht optisch hochbrechendes Material (6) ein Silizium-Zirkonium-Mischnitrid, wie Antimon-dotiertes Silizium-Zirkonium-Mischnitrid enthält.

12. Transparente Scheibe nach einem der Ansprüche 1 bis 11, wobei die Schicht optisch hochbrechendes Material (6) einen Brechungsindex n von 2,1 bis 2,5 , bevorzugt von 2,2 bis 2,3 aufweist.

13. Transparente Scheibe nach einem der Ansprüche 1 bis 12, wobei die elektrisch beheizbare Schichte (4) eine Abdeckschicht (11 ) enthält, die oberhalb der funktionellen Schichten (5) angeordnet ist und die Abdeckschicht (11) Siliziumnitrid oder ein Silizium-Zirkonium-Mischnitrid enthält.

14. Transparente Scheibe nach einem der Ansprüche 1 bis 13, wobei eine Blockerschicht (12) zwischen erster Anpassungsschicht (8) und silberhaltiger Schicht (9) und/oder zwischen zweiter Anpassungsschicht (8) und silberhaltiger Schicht (9) angeordnet ist und die Blockerschicht (10) Niob, Titan, Nickel, Chrom oder Legierungen davon enthält, bevorzugt Nickel-Chrom-Legierungen.

15. Transparente Scheibe nach einem der Ansprüche 1 bis 14, wobei sich die elektrisch beheizbare Beschichtung (4) auf mindestens 50%, bevorzugt auf mindestens 70% und besonders bevorzugt mindestens 90% der Fläche mindestens einer der Innenseiten (II) oder (III) der Scheiben (2.1) oder (2.2) erstreckt.

16. Verfahren zur Herstellung einer transparente Scheiben nach einem der Ansprüche 1 bis 15, wobei mindestens:
a) die Innenseite (II) einer ersten Scheibe (2.1) und/oder die Innenseite (III) einer zweiten Scheibe (2.2) mit einer elektrisch beheizbaren Beschichtung (4) beschichtet wird,
b) die elektrisch beheizbare Beschichtung (4) mit mindestens zwei Sammelleitern (13) verbunden wird,
c) die erste Scheibe (2.1) und die zweite Scheibe (2.2) auf eine Temperatur von 500°C bis 700°C erhitzt wird und
d) die ersten Scheibe (2.1) und die zweite Scheibe (2.2) mit einer Zwischenschicht (3) flächendeckend verbunden werden.

17. Verwendung der transparenten Scheibe nach einen der Ansprüche 1 bis 15 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und/oder Glasdach.
